# EUROPÄISCHE PATENTSCHRIFT

(11) **EP 1 966 579 B1**
(45) Veröffentlichungstag und Bekanntmachung des Hinweises auf die Patenterteilung: **10.02.2010**
(21) Anmeldenummer: 06827962.9
(22) Anmeldetag: 21.12.2006
(51) Int. Cl.: G01L 23/00

(54) **VORRICHTUNG ZUR MESSUNG DES ZYLINDERINNENDRUCKS VON BRENNKRAFTMASCHINEN**
APPARATUS FOR MEASURING THE CYLINDER INTERNAL PRESSURE OF INTERNAL COMBUSTION ENGINES
DISPOSITIF POUR MESURER LA PRESSION INTERIEURE D'UN CYLINDRE D'UN MOTEUR A COMBUSTION INTERNE

(30) Priorität: 22.12.2005 AT 20592005
(43) Veröffentlichungstag der Anmeldung: 10.09.2008
(73) Patentinhaber: AVL List GmbH, 8020 Graz (AT)
(72) Erfinder: MAYRHOFER, Norbert, A-8010 Graz (AT)
(74) Vertreter: Babeluk, Michael
(86) Internationale Anmeldenummer: PCT/AT2006/000534
(87) Internationale Veröffentlichungsnummer: WO 2007/070908

(56) Entgegenhaltungen:
- EP-A- 1 120 638
- DE-A1- 3 221 870

## Beschreibung

Die Erfindung betrifft eine Vorrichtung zur Messung des Zylinderinnendrucks von Brennkraftmaschinen mit innerer Verbrennung und hier insbesondere von Gasmotoren, mit einem ersten Ventil, das sich in den Zylinderinnenraum öffnet, mit einer Messkammer, die durch das erste Ventil in Verbindung mit dem Zylinderinnenraum gebracht werden kann, bzw. von diesem getrennt werden kann, und mit einem Drucksensor, der im Bereich der Messkammer angeordnet ist, um im geöffneten Zustand des ersten Ventils den Druck im Zylinderinnenraum zu messen, wobei im Bereich der Messkammer zumindest ein zweites Ventil vorgesehen ist, das zumindest in der geöffneten Stellung des ersten Ventils in eine geschlossene Stellung bringbar ist, um die Messkammer nach außen hin abzuschließen.

Bei der Konstruktion bei Brennkraftmaschinen mit innerer Verbrennung besteht zunehmend die Anforderung, den Zylinderinnendruck während des Betriebes zu messen. Eine solche Messung wird mittels sogenannter Indizierventile durchgeführt, die einen Drucksensor in einer Messkammer aufweisen, die über ein Ventil mit dem Zylinderinnenraum in Verbindung bringbar ist. Mittels solcher Drucksensoren besteht die Möglichkeit einer genauen Klopferkennung, es kann aber auch der Brennverlauf analysiert werden und die Zylindergleichstellung (Cylinder Balancing) überprüft werden. Solche Indizierventile sind beispielsweise aus der EP 0 811 833 A oder der DE 29 39 324 A bekannt. Eine ähnliche Lösung ist in der DE 32 21 870 A beschrieben.

Weiters offenbart die EP 1 120 638 A eine Zündkerze mit eingebautem Drucksensor. Die oben beschriebene Funktionalität des Öffnens und Verschließens der Messkammer kann bei dieser Lösung nicht erreicht werden.

Insbesondere bei Gasmotoren liegen jedoch besondere Verhältnisse vor, dies die optimale Gestaltung solcher Indizierventile schwierig machen. Gasmotoren werden häufig zur Stromerzeugung verwendet und stehen deshalb in Dauerbetrieb, so dass der Austausch des Drucksensors bei herkömmlichen Indizierventilen oft erst nach längerer Laufzeit im Zuge einer routinemäßigen Wartung durchführbar ist. Bis zu einem solchen Austausch muss die Brennkraftmaschine ohne die Funktionalität der Druckmessung betrieben werden. Weiters besteht bei Gasmotoren das Problem, dass im Unterschied zu Brennkraftmaschinen mit Selbstzündung, also Dieselmotoren, die Anordnung eines Indizierventils weitab vom Brennraum entfernt in der Regel nicht möglich ist, da eine thermische Überlastung des Indizierventils und des Indizierkanals auftreten würde.

Die vorliegende Erfindung ist aber auch für Brennkraftmaschinen anwendbar, die nicht Kolbenmaschinen sind, beispielsweise für Gasturbinen. In diesem Fall sind die hier verwendeten Begriffe "Zylinderinnenraum", "Zylinderinnendruck", usw. sinngemäß als "Brennraum", "Brennrauminnendruck", usw. zu verstehen.

Weiters sind aus der EP 0 811 832 A, der DE 12 64 103 B und der AT 235.046 B verschiedene Indizierventile bekannt, die einen Drucksensor und mehrere Ventile aufweisen. Diese Indizierventile weisen jedoch einen komplexen Aufbau auf und sind somit aufwändig herzustellen und störungsanfällig. Durch die relativ langen Wege im Inneren der Indizierventile können Druckspitzen nur ungenau erfasst werden und es besteht eine erhöhte Anfälligkeit gegenüber Verkokung.

Aufgabe der vorliegenden Erfindung ist es, diese Nachteile zu vermeiden und eine Lösung anzugeben, die einen einfachen Aufbau aufweist, robust ist und eine zuverlässige Messung des Zylinderinnendrucks ermöglicht. Insbesondere soll das erfindungsgemäße Indizierventil auch kontinuierliche Messungen über längere Zeiträume ermöglichen und einen Austausch des Drucksensors während des Betriebes der Brennkraftmaschine ermöglichen.

Erfindungsgemäß werden diese Aufgaben dadurch gelöst, dass das erste Ventil einen beweglichen Ventilkörper aufweist, in dem der Drucksensor angeordnet ist. Bei dieser Bauart ist der Drucksensor in der Regel koaxial im Ventilkörper angeordnet, so dass besonders wenig Raum im Zylinderkopf für das Indizierventil beansprucht wird. Durch die Bauart mit zwei Ventilen ist es möglich, eine sehr kompakte Bauform zu realisieren und die thermische Beanspruchung der Bauteile gering zu halten.

Das Entfernen des Drucksensors während des Betriebes der Brennkraftmaschine wird insbesondere dadurch erleichtert, dass der Drucksensor an einem Sensorhalter befestigt ist, der entfernbar im beweglichen Ventilkörper des ersten Ventils gehalten ist.

In einer ersten bevorzugten Ausführungsvariante der vorliegenden Erfindung ist das erste Ventil als nach innen öffnendes Tellerventil ausgebildet, das eine vom Zylinderinnenraum abgewandte Sitzfläche aufweist, die mit einem ersten Ventilsitz zusammenwirkt. Der besondere Vorteil dieser Ausführungsvariante besteht darin, dass bei geschlossenem ersten Ventil der Zylinderinnendruck dazu beiträgt, das Ventil in der geschlossenen Stellung zu halten. In diesem Zusammenhang ist es besonders günstig, wenn das zweite Ventil als Tellerventil ausgebildet ist und eine zur Messkammer gewandte Sitzfläche aufweist, die mit einem zweiten Ventilsitz zusammenwirkt.

Eine alternative Ausführungsvariante sieht vor, dass das erste Ventil als nach außen öffnendes Tellerventil ausgebildet ist, das eine zum Zylinderinnenraum hingewandte Sitzfläche aufweist, die mit einem ersten Ventilsitz zusammenwirkt.

Alternativ dazu kann das Ventil nach innen öffnen, was es erlaubt, das Ventil im geschlossenen Zustand auch als Druckwächter zu verwenden. Darüber hinaus ist es möglich, in diesem Fall einen kleineren Außendurchmesser zu realisieren.

Eine kontinuierliche Druckmessung über längere Zeiträume kann in besonders bevorzugter Weise dadurch erreicht werden, dass die Sitzfläche des ersten Ventils und die Sitzfläche des zweiten Ventils zumindest in der geöffneten Stellung des ersten Ventils thermisch gekoppelt sind. In der geöffneten Stellung des ersten Ventils wird dabei der in den Ventilkörper eingetragene Wärmestrom über die Sitzfläche des zweiten Ventils abgeleitet. Die thermische Kopplung besteht primär in einer räumlichen Nähe der Sitzflächen des ersten, bzw. zweiten Ventils, kann aber auch durch die Werkstoffwahl entsprechend beeinflusst werden, indem thermisch hoch leitfähige Werkstoffe für den Ventilkörper vorgesehen sind. In thermischer Hinsicht besonders bevorzugt ist es, wenn die Sitzfläche des ersten Ventils und die Sitzfläche des zweiten Ventils auf einem gemeinsamen Ventilkörper angeordnet sind. Neben den thermischen Vorteilen wird auch ein mechanisch besonders einfacher Aufbau erreicht.

Eine konstruktiv besonders einfache Lösung kann dadurch realisiert werden, dass die Messkammer über mindestens einen Kanal mit einer Umfangsfläche des Ventilkörpers des ersten Ventils in Verbindung steht. Dabei ist in der Regel die Messkammer zentrisch im Ventilkörper angeordnet und kann entsprechend kompakt ausgeführt werden.

Angemessene Schließ- bzw. Haltekräfte können dadurch erreicht werden, dass ein Ventilkörper des ersten Ventils über eine Feder in die geschlossenen Stellung des ersten Ventils vorgespannt ist.

Die Wartungsfreundlichkeit der erfindungsgemäßen Vorrichtung wird insbesondere dadurch erhöht, dass eine in den Zylinderkopf einzuschraubende Hülse vorgesehen ist, an der ein Ventilsitz für das erste Ventil und ein Ventilsitz für das zweite Ventil angeordnet sind. Ein häufig auftretendes Problem von Indizierventilen ist es, dass die Funktion des Drucksensors durch Verschmutzung, Verkokung und dergleichen beeinträchtigt wird. Um hier die Standzeiten zu erhöhen und die Wartungsintervalle zu verlängern, ist in einer besonders bevorzugten Ausführungsvariante der erfindungsgemäßen Vorrichtung vorgesehen, dass das erste Ventil und das zweite Ventil in eine Spülstellung bringbar sind, in der beide Ventile zumindest teilweise geöffnet sind, um die Messkammer sowohl zum Zylinderinnenraum als auch nach außen hin zu öffnen. Dabei wird in der Spülstellung eine relativ hohe Gasmenge mit hoher Geschwindigkeit durch die Messkammer hindurch nach außen geblasen, wodurch der Drucksensor gereinigt werden kann. Bei entsprechender konstruktiver Ausbildung kann eine gewisse Spülwirkung im Zuge des Umschaltens des ersten Ventils von der geöffneten in die geschlossene Stellung und umgekehrt erreicht werden. Eine besonders wirksame Spülung wird jedoch erreicht, wenn die Spülstellung einen kurzen vorbestimmten Zeitraum hindurch gehalten wird.

Eine weitere Ausführungsvariante der erfindungsgemäßen Vorrichtung sieht vor, dass ein Ventilkörper des ersten Ventils und ein Ventilkörper des zweiten Ventils mechanisch voneinander getrennt angeordnet sind. Dabei ist es bevorzugt, wenn die Betätigung des ersten Ventils mit der Betätigung des zweiten Ventils gekoppelt ausgeführt ist. Dadurch kann die Betätigung der Ventile unabhängig voneinander vorgenommen werden.

In der Folge wird die vorliegende Erfindung anhand der in den Figuren dargestellten Ausführungsbeispiele näher erläutert. Es zeigen:
- Fig. 1 und Fig. 2: schematisch zwei unterschiedliche Ausführungsvarianten der Erfindung der erfindungsgemäßen Vorrichtung im Schnitt;
- Fig. 3 und Fig. 4: die Ausführungsvarianten der Fig. 1 bzw. Fig. 2 in unterschiedlichen Betriebszuständen.

Im Zylinderkopf 1 einer Brennkraftmaschine mit innerer Verbrennung ist ein allgemein mit 2 bezeichnetes Indizierventil vorgesehen. Das Indizierventil 2 besteht aus einer Hülse 3, die in den Zylinderkopf 1 eingeschraubt ist. Das Indizierventil 2 öffnet sich an seiner Unterseite in den Brennraum 1a eines nicht näher dargestellten Zylinders.

In der Hülse 3 ist ein Ventilkörper 4 in Axialrichtung beweglich gelagert, der an seinem dem Brennraum 1a zugewandten Ende einen Ventilteller 5 aufweist, der gleichzeitig das erste Ventil darstellt. Oberhalb des Ventiltellers 5 ist eine Messkammer 6 vorgesehen, die über Kanäle 7 im Ventilkörper 4 mit dessen Außenseite in Verbindung steht. In der Messkammer 6 ist ein Drucksensor 8 angeordnet, der über einen Sensorhalter 9 im Ventilkörper 4 gehalten ist.

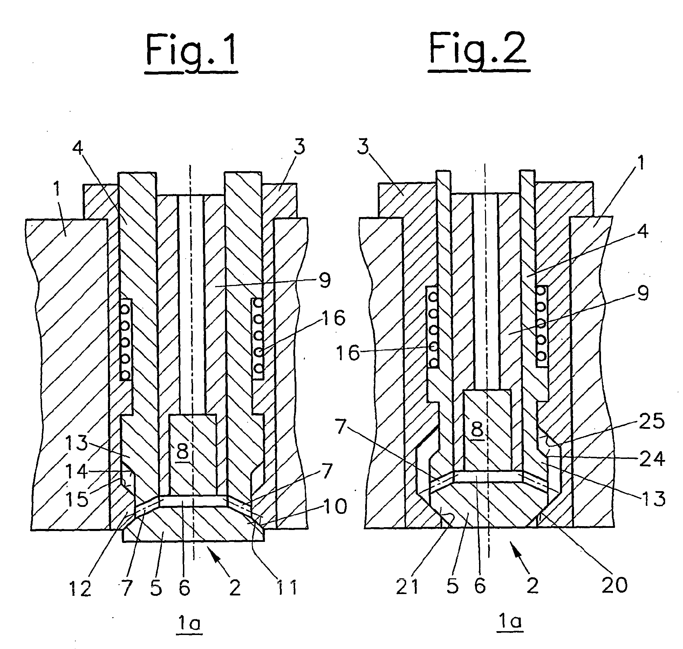

Bei der Ausführungsvariante von Fig. 1 öffnet sich das erste Ventil 5 zum Brennraum 1a hin, indem die Sitzfläche 10 des ersten Ventils 5 von einem Ventilsitz 11 abhebt, der in der Hülse 3 zum Brennraum 1a hingewandt angeordnet ist. Dementsprechend ist die Sitzfläche 10 vom Brennraum 1a wegorientiert. Der Ventilsitz 11 des ersten Ventils 5 ist an der Hülse 3 an der Unterseite eines ringförmig umlaufenden Vorsprunges 12 angeordnet, an dessen Oberseite ein weiterer Ventilsitz 15 vorgesehen ist, der mit einer Sitzfläche 14 eines zweiten Ventils 13 zusammenwirkt. Wenn das erste Ventil 5 vollständig geöffnet ist, liegt die Sitzfläche 14 des zweiten Ventils 13 am Ventilsitz 15 der Hülse 3 an. Aufgrund der räumlichen Nähe des Ventiltellers 5 zu der Sitzfläche 14 kann die im Betrieb der Brennkraftmaschine in den Ventilteller 5 eingetragene Wärme effizient an die Hülse 3 und damit an den Zylinderkopf 1 abgegeben werden.

Der Ventilkörper 4 ist durch eine Feder 16 nach oben hin, also in die geschlossenen Stellung des Ventils 5, vorgespannt.

Die Ausführungsvariante nach Fig. 2 unterscheidet sich von der Fig. 1 dadurch, dass die Sitzfläche 20 des ersten Ventils 5 zum Brennraum 1a der Brennkraftmaschine hin orientiert ist. Dementsprechend ist der Ventilsitz 21 in der Hülse 3 von dem Brennraum 1a wegorientiert. Das zweite Ventil 13 besitzt eine Sitzfläche 24, die mit einem Ventilsitz 25 in der Hülse 3 zusammenwirkt. Im Gegensatz zur Ausführungsvariante von Fig. 1 spannt die Feder 16 der Ausführungsvariante von Fig. 2 den Ventilkörper 4 nach unten vor, so dass in Übereinstimmung mit der Ausführungsvariante von Fig. 1 das erste Ventil 5 in die geschlossene Stellung vorgespannt ist.

Beiden Ausführungsvarianten ist gemeinsam, dass eine mittlere Stellung einstellbar ist, in der sowohl das erste Ventil 5 als auch das zweite Ventil 13 in teilweise geöffnetem Zustand befinden. Auf diese Weise ist es möglich, die Messkammer 6 und damit den Drucksensor 8 durch die aus dem Brennraum 1a ausströmenden Gase zu spülen.

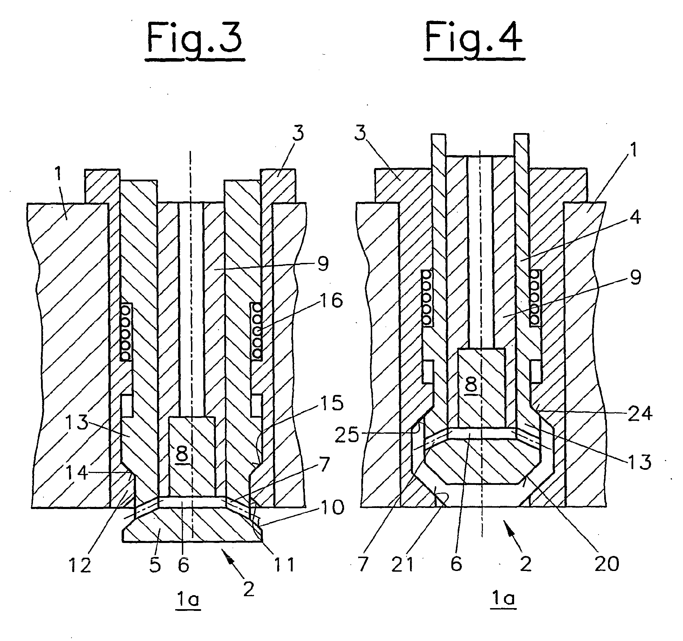

Fig. 3 zeigt die Ausführungsvariante von Fig. 1 bei geöffnetem ersten Ventil 5. Fig. 4 stellt die Ausführungsvariante von Fig. 2 bei geöffnetem ersten Ventil 5 dar.

Die vorliegende Erfindung ermöglicht es, die Messung des Zylinderinnendrucks von Gasmotoren und ähnlichen Brennkraftmaschinen in robuster und dauerhafter Weise durchzuführen.

## Patentansprüche

1. Vorrichtung zur Messung des Zylinderinnendrucks von Brennkraftmaschinen mit innerer Verbrennung und hier insbesondere von Gasmotoren, mit einem ersten Ventil (5), das sich in den Zylinderinnenraum öffnet, mit einer Messkammer (6), die durch das erste Ventil (5) in Verbindung mit dem Zylinderinnenraum gebracht werden kann, bzw. von diesem getrennt werden kann, und mit einem Drucksensor (8), der im Bereich der Messkammer (6) angeordnet ist, um im geöffneten Zustand des ersten Ventils (5) den Druck im Zylinderinnenraum (1a) zu messen, wobei im Bereich der Messkammer (6) zumindest ein zweites Ventil (13) vorgesehen ist, das zumindest in der geöffneten Stellung des ersten Ventils (5) in eine geschlossene Stellung bringbar ist, um die Messkammer (6) nach außen hin abzuschließen, **dadurch gekennzeichnet, dass** das erste Ventil (5) einen beweglichen Ventilkörper (4) aufweist, in dem der Drucksensor (8) angeordnet ist.

2. Vorrichtung nach Anspruch 1, **dadurch gekennzeichnet, dass** der Drucksensor (8) an einem Sensorhalter (9) befestigt ist, der entfernbar im beweglichen Ventilkörper (4) des ersten Ventils (5) gehalten ist.

3. Vorrichtung nach einem der Ansprüche 1 bis 2, **dadurch gekennzeichnet, dass** das erste Ventil (5) als nach innen öffnendes Tellerventil ausgebildet ist, das eine vom Zylinderinnenraum (1a) abgewandte Sitzfläche (10) aufweist, die mit einem ersten Ventilsitz (11) zusammenwirkt.

4. Vorrichtung nach Anspruch 3, **dadurch gekennzeichnet, dass** das zweite Ventil (13) als Tellerventil ausgebildet ist und eine zur Messkammer (6) gewandte Sitzfläche (14) aufweist, die mit einem zweiten Ventilsitz (15) zusammenwirkt.

5. Vorrichtung nach einem der Ansprüche 1 bis 2, **dadurch gekennzeichnet, dass** das erste Ventil (5) als nach außen öffnendes Tellerventil ausgebildet ist, das eine zum Zylinderinnenraum (1a) hingewandte Sitzfläche (20) aufweist, die mit einem ersten Ventilsitz (21) zusammenwirkt.

6. Vorrichtung nach Anspruch 5, **dadurch gekennzeichnet, dass** das zweite Ventil (13) als Tellerventil ausgebildet ist und eine von der Messkammer (6) abgewandte Sitzfläche (24) aufweist, die mit einem zweiten Ventilsitz (25) zusammenwirkt.

7. Vorrichtung nach einem der Ansprüche 3 bis 6, **dadurch gekennzeichnet, dass** die Sitzfläche (10, 20) des ersten Ventils (5) und die Sitzfläche (14, 24) des zweiten Ventils (13) zumindest in der geöffneten Stellung des ersten Ventils (5) thermisch gekoppelt sind.

8. Vorrichtung nach einem der Ansprüche 3 bis 7, **dadurch gekennzeichnet, dass** die Sitzfläche (10, 20) des ersten Ventils (5) und die Sitzfläche (14, 24) des zweiten Ventils (13) auf einem gemeinsamen Ventilkörper (4) angeordnet sind.

9. Vorrichtung nach einem der Ansprüche 1 bis 8, **dadurch gekennzeichnet, dass** die Messkammer (6) über mindestens einen Kanal mit einer Umfangsfläche des Ventilkörpers (4) des ersten Ventils (5) in Verbindung steht.

10. Vorrichtung nach einem der Ansprüche 1 bis 9, **dadurch gekennzeichnet, dass** ein Ventilkörper (4) des ersten Ventils (5) über eine Feder (16) in die geschlossenen Stellung des ersten Ventils (5) vorgespannt ist.

11. Vorrichtung nach einem der Ansprüche 1 bis 10, **dadurch gekennzeichnet, dass** eine in den Zylinderkopf (1) einzuschraubende Hülse (3) vorgesehen ist, an der ein Ventilsitz (11, 21) für das erste Ventil (5) und ein Ventilsitz (15, 25) für das zweite Ventil (13) angeordnet ist.

12. Vorrichtung nach einem der Ansprüche 1 bis 11, **dadurch gekennzeichnet, dass** das erste Ventil (5) und das zweite Ventil (13) in eine Spülstellung bringbar sind, in der beide Ventile (5, 13) zumindest teilweise geöffnet sind, um die Messkammer (6) sowohl mit dem Zylinderinnenraum als auch nach außen hin zu öffnen.

13. Vorrichtung nach einem der Ansprüche 1 bis 12, **dadurch gekennzeichnet, dass** ein Ventilkörper (4) des ersten Ventils (5) und ein Ventilkörper (4) des zweiten Ventils (13) mechanisch voneinander getrennt angeordnet sind.

14. Vorrichtung nach Anspruch 13, **dadurch gekennzeichnet, dass** die Betätigung des ersten Ventils (5) mit der Betätigung des zweiten Ventils (13) gekoppelt ausgeführt ist.

15. Vorrichtung nach einem der Ansprüche 1 bis 14, **dadurch gekennzeichnet, dass** die Betätigung des ersten und/oder zweiten Ventils (5, 13) elektromagnetisch erfolgt.

## Claims

1. An apparatus for measuring the cylinder internal pressure of internal combustion engines and, in particular, of gas engines, said apparatus having a first valve (5) which opens into the cylinder interior space, a measurement chamber (6) which can be connected to the cylinder interior space and can be disconnected from the latter by means of the first valve (5), and a pressure sensor (8) which is arranged in the region of the measurement chamber (6) in order to measure the pressure in the cylinder interior space (1a) when the first valve (5) is open, with at least one second valve (13) being provided in the region of the measurement chamber (6), said second valve being able to be changed to a closed position at least when the first valve (5) is open in order to seal off the measurement chamber (6) towards the outside, **characterised in that** the first valve (5) comprises a movable valve body (4) in which the pressure sensor (8) is arranged.

2. An apparatus according to claim 1, **characterised in that** the pressure sensor (8) is fastened to a sensor holder (9) which is held in a removable fashion in the movable valve body (4) of the first valve (5).

3. An apparatus according to one of the claims 1 to 2, **characterised in that** the first valve (5) is arranged as an inwardly opening poppet valve which has a seat surface (10) which is averted from the cylinder internal space (1a) and cooperates with a first valve seat (11).

4. An apparatus according to claim 3, **characterised in that** the second valve (13) is arranged as a poppet valve and has a seat surface (14) which faces the measurement chamber (6) and cooperates with a second valve seat (15).

5. An apparatus according to one of the claims 1 to 2, **characterised in that** the first valve (5) is arranged as a poppet valve which opens to the outside and which comprises a seat surface (20) facing the cylinder internal space (1a) and cooperating with the first valve seat (21).

6. An apparatus according to claim 5, **characterised in that** the second valve (13) is arranged as a poppet valve and comprises a seat surface (24) which is averted from the measurement chamber (6) and cooperates with a second valve seat (25).

7. An apparatus according to one of the claims 3 to 6, **characterised in that** the seat surface (10, 20) of the first valve (5) and the seat surface (14, 24) of the second valve (13) are thermally coupled at least in the opened position of the first valve (5).

8. An apparatus according to one of the claims 3 to 7, **characterised in that** the seat surface (10, 20) of the first valve (5) and the seat surface (14, 24) of the second valve (13) are arranged on a common valve body (4).

9. An apparatus according to one of the claims 1 to 8, **characterised in that** the measurement chamber (6) is in connection with a circumferential surface of the valve body (4) of the first valve (5) via at least one port.

10. An apparatus according to one of the claims 1 to 9, **characterised in that** a valve body (4) of the first valve (5) is pre-tensioned via a spring (16) to the closed position of the first valve (5).

11. An apparatus according to one of the claims 1 to 10, **characterised in that** a sleeve (3) to be screwed into the cylinder head (1) is provided on which a valve seat (11, 21) for the first valve (5) and a valve seat (15, 25) for the second valve (13) are arranged.

12. An apparatus according to one of the claims 1 to 11, **characterised in that** the first valve (5) and the second valve (13) can be brought to a scavenging position in which both valves (5, 13) are at least partly opened in order to open the measurement chamber (6) both towards the cylinder internal space as well as to the outside.

13. An apparatus according to one of the claims 1 to 12, **characterised in that** a valve body (4) of the first valve (5) and a valve body (4) of the second valve (13) are arranged to be mechanically separated from each other.

14. An apparatus according to claim 13, **characterised in that** the actuation of the first valve (5) is performed in a coupled manner with the actuation of the second valve (13).

15. An apparatus according to one of the claims 1 to 14, **characterised in that** the actuation of the first and/or second valve (5, 13) occurs electromagnetically.

## Revendications

1. Dispositif pour mesurer la pression intérieure de cylindres de moteurs à combustion interne et, ici en particulier, de moteurs à gaz, avec une première soupape (5), s'ouvrant dans la chambre intérieure de cylindre, avec une chambre de mesure (6), pouvant être placée en liaison avec la chambre intérieure de cylindre, ou pouvant être séparée de celle-ci, au moyen de la première soupape (5), et avec un capteur de pression (8), disposé dans la zone de la chambre de mesure (6), pour mesurer la pression régnant dans la chambre intérieure de cylindre (1a) lorsque la première soupape (5) est à l'état ouvert, dans la zone de la chambre de mesure (6) étant disposée au moins une deuxième soupape (13), susceptible, au moins lorsque la première soupape (5) se trouve dans la position ouverte, d'être placée en une position fermée pour fermer la chambre de mesure (6) vers l'extérieur, **caractérisé en ce que** la première soupape (5) présente un corps de soupape (4) mobile, dans lequel est disposé le capteur de pression (8).

2. Dispositif selon la revendication 1, **caractérisé en ce que** le capteur de pression (8) est fixé sur un support de capteur (9), maintenu, de manière à pourvoir être enlevé, dans le corps de soupape (4) mobile de la première soupape (5).

3. Dispositif selon l'une des revendications 1 à 2, **caractérisé en ce que** la première soupape (5) est réalisée sous forme de soupape à siège plan ouvrant vers l'intérieur, présentant une face de siège (10) opposée à la chambre intérieure de cylindre (1a), coopérant avec un premier siège de soupape (11).

4. Dispositif selon la revendication 3, **caractérisé en ce que** la deuxième soupape (13) est réalisée sous forme de soupape à siège plan et présente une face de siège (14) tournée vers la chambre de mesure (6), coopérant avec un deuxième siège de soupape (15).

5. Dispositif selon l'une des revendications 1 à 2, **caractérisé en ce que** la première soupape (5) est réalisée sous forme de soupape à siège plan ouvrant vers l'extérieur, présentant une face de siège (20) tournée vers la chambre intérieure de cylindre (la), coopérant avec un premier siège de soupape (21).

6. Dispositif selon la revendication 5, **caractérisé en ce que** la deuxième soupape (13) est réalisée sous forme de soupape à siège plan et présente une face de siège (24) opposée à la chambre de mesure (6), coopérant avec un deuxième siège de soupape (25).

7. Dispositif selon l'une des revendications 3 à 6, **caractérisé en ce que** la face de siège (10, 20) de la première soupape (5) et la face de siège (14, 24) de la deuxième soupape (13) sont couplées thermiquement, au moins lorsque la première soupape (5) se trouve dans la position fermée.

8. Dispositif selon l'une des revendications 3 à 7, **caractérisé en ce que** la face de siège (10, 20) de la première soupape (5) et la face de siège (14, 24) de la deuxième soupape (13) sont disposées sur un corps de soupape (4) commun.

9. Dispositif selon l'une des revendications 1 à 8, **caractérisé en ce que** la chambre de mesure (6) est reliée, par au moins un canal, à une surface périphérique du corps de soupape (4) de la première soupape (5).

10. Dispositif selon l'une des revendications 1 à 9, **caractérisé en ce qu'**un corps de soupape (4) de la première soupape (5) est précontraint, par l'intermédiaire d'un ressort (16), dans la position fermée de la première soupape (5).

11. Dispositif selon l'une des revendications 1 à 10, **caractérisé en ce qu'**est prévue une douille (3), à visser dans la culasse (1), douille sur laquelle est disposé un siège de soupape (11, 21) pour la première soupape (5) et un siège de soupape (15, 25) pour la deuxième soupape (13).

12. Dispositif selon l'une des revendications 1 à 11, **caractérisé en ce que** la première soupape (5) et la deuxième soupape (13) sont susceptibles d'être placées dans une position de rinçage, dans laquelle les deux soupapes (5, 13) sont au moins partiellement ouvertes, pour ouvrir la chambre de mesure (6) en communication tant avec la chambre intérieure de cylindre qu'également avec l'extérieur.

13. Dispositif selon l'une des revendications 1 à 12, **caractérisé en ce qu'**un corps de soupape (4) de la première soupape (5) et un corps de soupape (4) de la deuxième soupape (13) sont disposés de manière mécaniquement indépendante l'un de l'autre.

14. Dispositif selon la revendication 13, **caractérisé en ce que** l'actionnement de la première soupape (5) est effectué de manière couplée avec l'actionnement de la deuxième soupape (13).

15. Dispositif selon l'une des revendications 1 à 14, **caractérisé en ce que** l'actionnement de la première et/ou de la deuxième soupape (5, 13) se fait de manière électromagnétique.
